# EUROPEAN PATENT APPLICATION

(11) **EP 1 909 138 A2**
(43) Date of publication of application: **09.04.2008**
(21) Application number: 07117067.4
(22) Date of filing: 24.09.2007
(51) Int. Cl.: G02F 1/167, G02F 1/1339

(54) **Electronic paper apparatus**

(30) Priority: 29.09.2006 CN 200610152418
(71) Applicant: Gigno Technology Co., Ltd., Datong Taipei City 103 (TW)
(72) Inventor: Sah, Wen-Jyh, 700 Tainan City (TW)
(74) Representative: Patentanwälte Kewitz & Kollegen

(57) **Abstract**

An electronic paper apparatus includes a driving substrate, at least one electronic paper and an encapsulating structure. The electronic paper is disposed over the driving substrate. The encapsulating structure is connected with the driving substrate to form a closed space, and the electronic paper is disposed in the closed space.

## Description

### BACKGROUND OF THE INVENTION

### Field of Invention

The invention relates to a display apparatus and, in particular, to an electronic paper apparatus.

### Related Art

In the information era, the demands of users for communicating with information sources are increasing. Therefore, the display apparatus that can broadcast information has become one of the indispensable electronic products in modem life. The display apparatus has evolved from the cathode ray tube (CRT) display to the modem liquid crystal display (LCD) that is thinner and lighter. Accordingly, the LCD has been widely used in communications, information and consumer electronics. However, the LCD has to be continuously powered in order to operate. Therefore, the display technology of electrophoretic display (EPD) with lower power consumption has been invented.

Now, computers are often used to process and store a lot of data. However, the volume, weight and operation of computer are not as convenient in carrying and reading as printed information on paper. To enjoy the portability and convenience in reading of paper while having the capabilities to process data and be environmentally friendly, electronic paper using the EPD is invented.

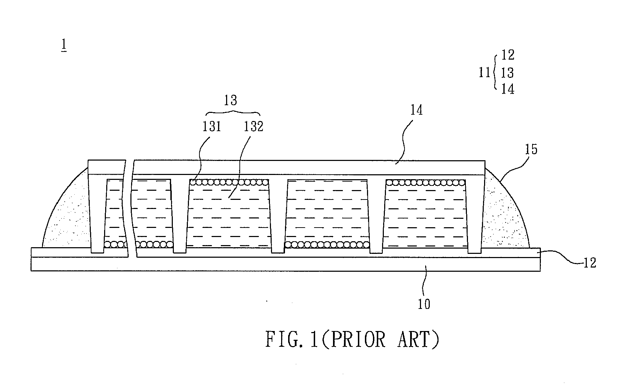

As shown in FIG. 1, according to the electrophoretic principle, a conventional electronic paper apparatus 1 can produce colors by driving electrically charged particles with an electric field. The electronic paper apparatus 1 includes a driving substrate 10 and an electronic paper 11. The electronic paper 11 is disposed on the driving substrate 10. The driving substrate 10 has a patterned pixel electrode layer (not shown). The electronic paper 11 has an adhesive layer 12, an electrophoretic material 13 and a transparent electrode layer 14. The transparent electrode layer 14 is disposed opposite to the pixel electrode layer. The electrophoretic material 13, including electrically charged particles 131 and a dielectric solvent 132, is sealed between the transparent electrode layer 14 and the pixel electrode layer.

When a potential difference is imposed between the pixel electrode layer and the transparent electrode layer 14, the electrically charged particles 131 move toward the electrode plate that carries charges of the opposite polarity. Therefore, by selectively imposing a voltage on the pixel electrode layer and the transparent electrode layer 14, the color of the dielectric solvent 132 or the charged particles can be determined. The displayed color is changed by applying a reverse voltage.

The electrophoretic material 13 between the pixel electrode layer and the transparent electrode layer 14 can be encapsulated into a capsule using the microencapsulation technique. An alternative approach is to form microcups between the pixel electrode layer and the transparent electrode and dispose the electrophoretic material into the microcups. Which is shown in FIG. 1.

The electronic paper apparatus 1 is very sensitive to the moisture in the environment. To avoid moisture from entering the electronic paper apparatus 1 via the sidewall of the electrophoretic material and affecting the performance thereof, an adhesive material 15 is usually applied around the display apparatus in the prior art so that the electronic paper apparatus can be read in various conditions.

However, the adhesive material 15 applied around the electronic paper apparatus 1 cannot absolutely separate moisture. Therefore, it is an important subject to provide an electronic paper apparatus with good sealing and better endurance.

### SUMMARY OF THE INVENTION

In view of the foregoing, the invention is to provide an electronic paper apparatus with good sealing and better endurance.

To achieve the above, an electronic paper apparatus of the invention includes a driving substrate, at least one electronic paper and an encapsulating structure. The electronic paper is disposed over the driving substrate. The encapsulating structure is connected to the driving substrate and covers the electronic paper.

As mentioned above, the electronic paper apparatus according to the invention uses an encapsulating structure to cover the electronic paper. The covering area of the encapsulating structure is larger than the area of the electronic paper on the substrate in order to completely encapsulate the electronic paper. Therefore, the invention can effectively prevent moisture from entering the electronic paper apparatus. Such a good sealing property enhances the moisture resistance of the electronic paper apparatus.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a schematic view of a conventional electronic paper;

FIG. 2 is a cross-sectional view of an electronic paper apparatus according to a preferred embodiment of the invention;

FIG. 3 is a top view of an electronic paper apparatus according to the preferred embodiment of the invention; and

FIG. 4 is a cross-sectional view of another electronic paper apparatus according to the preferred embodiment of the invention.

### DETAILED DESCRIPTION OF THE INVENTION

The present invention will be apparent from the following detailed description, which proceeds with reference to the accompanying drawings, wherein the same references relate to the same elements.

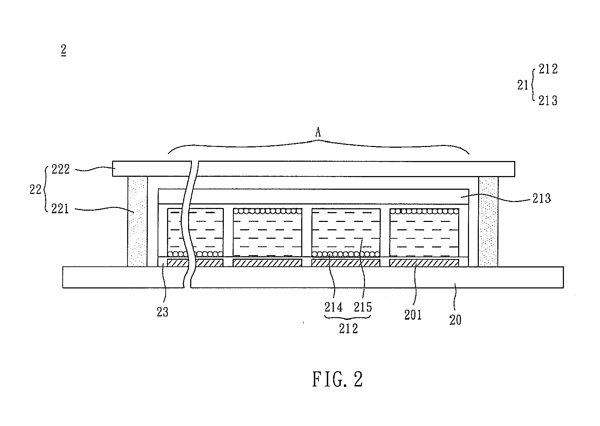

As shown in FIG. 2, an electronic paper apparatus 2 according to a preferred embodiment of the invention includes a driving substrate 20, at least one electronic paper 21 and an encapsulating structure 22. The electronic paper apparatus 2 is an EPD such as a reflective type EPD, a transmissive type EPD, or a transflective type EPD.

The driving substrate 20 includes a pixel electrode layer 201 that contains a plurality of pixel electrodes. The driving substrate 20 can be a glass substrate, a plastic substrate, a circuit board or a soft circuit board.

The electronic paper 21 is disposed on the driving substrate 20, thereby defining a display area A covering the image display area, as shown in FIG. 2. In this embodiment, the electronic paper apparatus 2 further includes an adhesive layer 23 for connecting the electronic paper 21 and the driving substrate 20.

The electronic paper 21 is formed on the driving substrate 20 and contains an electrophoretic material 212 and a transparent electrode layer 213. In this embodiment, the pixel electrode layer 201 and the transparent electrode layer 213 are disposed opposite to each other. The electrophoretic material 212 is disposed between the pixel electrode layer 201 and the transparent electrode layer 213. In the embodiment, the transparent electrode layer 213 can be formed by indium tin oxide (ITO). Of course, the transparent electrode layer 213 can also be formed by aluminum zinc oxide (AZO), indium zinc oxide (IZO) or cadmium tin oxide (CTO).

The electrophoretic material 212 includes several charged particles 214 and a dielectric solvent 215. The charged particles 214 are dispersed in the dielectric solvent 215. In this embodiment, the electrophoretic material 212 is contained in, for example but not limited to, a microcup. Alternatively, the electrophoretic material 212 can be collected in a microcapsule structure (not shown).

Using the passive driving design, the pixel electrodes on the driving substrate 20 are arranged corresponding to the pixels, respectively. The transparent electrode layer 213 forms the common electrode. Herein, each pair of oppositely disposed pixel electrode layer 201 and transparent electrode layer 213 forms a capacitor structure, with the electrophoretic material 212 being the dielectric material thereof. When a potential difference is imposed on the two electrode layers 201 and 213, the charged particles 214 are driven to move, thereby displaying the color of the charged particles 214 or the dielectric solvent 215.

Alternatively, the electronic paper apparatus 2 of this embodiment can be an active driving apparatus. In this case, the driving substrate 20 further includes several thin-film transistors (TFTs). The TFTs (not shown) are formed in an array on the driving substrate 20 using, for example, the amorphous Si or low temperature polysilicon process. Moreover, the TFTs are connected with the pixel electrodes as the switches to drive the pixels.

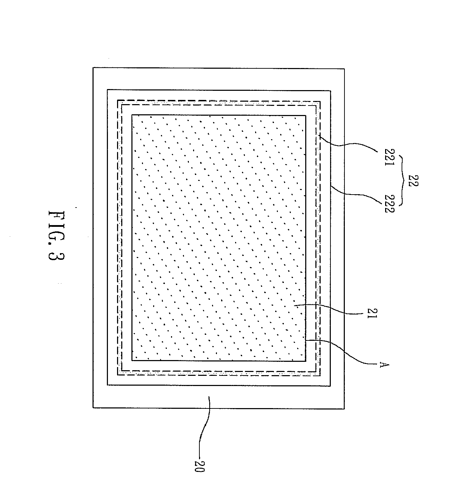

As shown in FIGS. 2 and 3, the encapsulating structure 22 is connected to the driving substrate 20 to form a closed space in which the electronic paper 21 is disposed. In this embodiment, the encapsulating structure 22 includes a first adhesive material 221 and a covering plate 222. The first adhesive material 221 is applied around the display area A for connecting the covering plate 222 and the driving substrate 20 so that the covering plate 222 completely covers the display area A. The closed space is thus defined by the first adhesive material 221, the covering plate 222 and the driving substrate 20. The covering plate 222 can be a transparent substrate made of glass or plastic. The first adhesive material 221 is a water-proof material and can be a photo-curing glue or a thermo-curing glue. The first adhesive material 221 can further contain spacers made of plastic material, glass material or ceramic material, in order to enhance the control of the dimension of the gap between the covering plate 222 and the driving substrate 20. Furthermore, the width of the first adhesive material 221 can be changed according to the practical need of blocking the moisture. In addition, the electronic paper apparatus 2 may further include a medium (not shown) filled in the closed space.

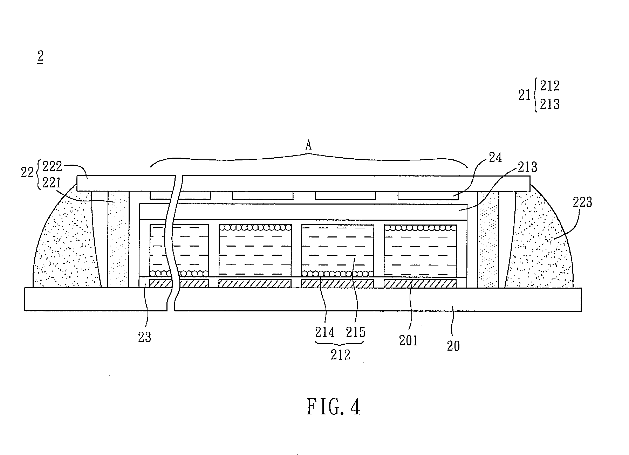

To achieve a better moisture blocking effect, as shown in FIG. 4, a second adhesive material 223 can be disposed around the covering plate 222 near the first adhesive material 221. The second adhesive material 223 connects the covering plate 222 and the driving substrate 20, and thus prevents moisture from entering the electronic paper 21. In addition, the second adhesive material 223 also enhances the connecting strength of the encapsulating structure 22 to avoid separation. Besides, to achieve perfect sealing, the second adhesive material 223 can cover part of the covering plate 222 to connect the covering plate 222 and the driving substrate 20. In the embodiment, the second adhesive material 223 can be the same as the first adhesive material 221, but not limited to those examples. The material of the second adhesive material 223 can be different from that of the first adhesive material 221.

As shown in FIG. 4, another electronic apparatus 2 according to the embodiment can further include an optical modulating layer 24 disposed on one surface of the covering plate 222. In this embodiment, the optical modulating layer 24 can be a filter layer or a color converting layer, corresponding to one of the pixels. The filter layer can be at least one selected from the group consisting of red, blue and green filter layers. The color converting layer includes a fluorescent and/or phosphorus material. Multiple colors are achieved by mixing, scattering and exciting passing light.

In summary, the electronic paper apparatus according to the invention uses an encapsulating structure to cover the electronic paper. The covering area of the encapsulating structure is larger than the area of the electronic paper on the substrate in order to completely encapsulate the electronic paper. Therefore, the invention can effectively prevent moisture from entering the electronic paper apparatus. Such a good sealing property enhances the moisture resistance of the electronic paper apparatus.

Although the invention has been described with reference to specific embodiments, this description is not meant to be construed in a limiting sense. Various modifications of the disclosed embodiments, as well as alternative embodiments, will be apparent to persons skilled in the art. It is, therefore, contemplated that the appended claims will cover all modifications that fall within the true scope of the invention.

## Claims

1. An electronic paper apparatus, comprising:
a driving substrate;
at least one electronic paper, which is disposed over the driving substrate; and
an encapsulating structure, which is connected to the driving substrate to form a closed space, wherein the electronic paper is disposed in the closed space.

2. The electronic paper apparatus of claim 1, wherein the driving substrate is a glass substrate, a plastic substrate, a circuit board or a soft circuit board.

3. The electronic paper apparatus of claim 1, wherein the encapsulating structure includes a first adhesive material and a covering plate, the first adhesive material connects the covering plate to the driving substrate, and the first adhesive material, the covering plate and the driving substrate define the closed space.

4. The electronic paper apparatus of claim 3, wherein the first adhesive material is disposed between the covering plate and the driving substrate.

5. The electronic paper apparatus of claim 3, wherein the first adhesive material is a photo-curing glue or a thermo-curing glue.

6. The electronic paper apparatus of claim 3, wherein the first adhesive material contains spacer made of plastic material, glass material or ceramic material.

7. The electronic paper apparatus of claim 3, wherein the first adhesive material is water-proof.

8. The electronic paper apparatus of claim 3, wherein the covering plate is a transparent substrate.

9. The electronic paper apparatus of claim 3, wherein the covering plate is made of glass or plastic.

10. The electronic paper apparatus of claim 1, wherein the driving substrate includes a pixel electrode layer.

11. The electronic paper apparatus of claim 1, wherein the driving substrate includes a pixel electrode layer, and the driving substrate further comprises a plurality of thin-film transistors (TFT) for driving the pixel electrode layer.

12. The electronic paper apparatus of claim 11, wherein the electronic paper comprises an electrophoretic material and a transparent electrode layer, the transparent electrode is disposed opposite to the pixel electrode layer, and the electrophoretic material is disposed between the transparent electrode layer and the pixel electrode layer.

13. The electronic paper apparatus of claim 12, wherein the electrophoretic material comprises a plurality of charged particles and a dielectric solvent, and the charged particles are dispersed in the dielectric solvent.

14. The electronic paper apparatus of claim 1 further comprising an adhesive layer connecting the electronic paper to the driving substrate.

15. The electronic paper apparatus of claim 3 further comprising an optical modulating layer disposed on one surface of the covering plate.

16. The electronic paper apparatus of claim 15, wherein the optical modulating layer is a filter layer or a color converting layer.

17. The electronic paper apparatus of claim 3, further comprising a second adhesive material disposed around the covering plate and located around and adjacent to the first adhesive material, wherein the second adhesive material connects the covering plate to the driving substrate.

18. The electronic paper apparatus of claim 17, wherein the second adhesive material is disposed around the covering plate.

19. The electronic paper apparatus of claim 17, wherein the second adhesive material covers part of the covering plate.

20. The electronic paper apparatus of claim 1, further comprising a medium filled in the closed space.
